(19) **Europäisches Patentamt / European Patent Office / Office européen des brevets**

(11) **EP 1 554 540 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **03770875.7**

(22) Anmeldetag: **24.09.2003**

(51) Int Cl.:
***G01B 17/02*** (2006.01)

(86) Internationale Anmeldenummer:
**PCT/DE2003/003164**

(87) Internationale Veröffentlichungsnummer:
**WO 2004/036144 (29.04.2004 Gazette 2004/18)**

(54) **ULTRASCHALL-PRÜFGERÄT FÜR DIE PRÜFUNG EINES WERKSTÜCKS**

ULTRASOUND CONTROL DEVICE FOR INSPECTING A WORKPIECE

APPAREIL DE CONTROLE A ULTRASONS POUR LE CONTROLE D'UNE PIECE A USINER

(84) Benannte Vertragsstaaten:
**AT BE BG CH CY CZ DE DK EE ES FI FR GB GR HU IE IT LI LU MC NL PT RO SE SI SK TR**

(30) Priorität: **10.10.2002 DE 10247257**

(43) Veröffentlichungstag der Anmeldung:
**20.07.2005 Patentblatt 2005/29**

(73) Patentinhaber: **Agfa NDT GmbH**
**D-50354 Hürth (DE)**

(72) Erfinder:
• **BUSCHKE, Paul**
**50354 Hürth (DE)**

• **KIRCHNER, Bernd**
**50374 Erftstadt (DE)**

(74) Vertreter: **Bauer, Wulf**
**Lindenallee 43**
**50968 Köln-Marienburg (DE)**

(56) Entgegenhaltungen:
**GB-A- 2 062 383      US-A- 4 055 989**
**US-A- 5 717 142**

• **PATENT ABSTRACTS OF JAPAN vol. 015, no. 338 (P-1243), 27. August 1991 (1991-08-27) & JP 03 125964 A (HITACHI CONSTR MACH CO LTD), 29. Mai 1991 (1991-05-29)**

EP 1 554 540 B1

**Beschreibung**

Die Erfindung bezieht sich auf ein Ultraschall-Prüfgerät für die zerstörungsfreie Prüfung eines Werkstücks nach dem Oberbegriff des Patentanspruchs 1.

Für die zerstörungsfreie Prüfung eines Werkstücks durch Ultraschall sind geeignete Prüfgeräte bekannt. Ganz allgemein verwiesen wird auf das DE-Buch J. und. H. Krautkrämer, Werkstoffprüfung mit Ultraschall, vierte Auflage. Dabei wird nach dem Impuls-Echoverfahren gearbeitet. Der Prüfkopf gibt vorzugsweise periodisch Ultraschallimpulse ab und empfängt danach Echosignale dieser abgegebenen Ultraschallimpulse. Im Allgemeinen ist das Echosignal der Eintrittsfläche ein besonders starkes Signal, das die weiteren Echosignale übersteigt. Die weiteren Echosignale stammen aus dem Werkstück und insbesondere von der Rückwand des Werkstücks, wo sie mindestens einmal reflektiert werden. Insoweit ist das Prüfungsverfahren für Werkstücke geeignet, deren Eintrittsfläche im wesentlichen parallel zur Rückwand verläuft, so dass es zur Ausbildung mehrerer Hin- und Hergänge des Ultraschallimpulses im Werkstück kommt. Dies ist beispielsweise bei der Prüfung von punktgeschweißten Blechverbindungen durch Ultraschall gegeben.

Die empfangenen Echosignale werden auf dem Monitor dargestellt. Die Darstellung erfolgt allgemein als sogenanntes A-Bild, bei dem über der Zeitachse die Spannungswerte der empfangenen Echosignale dargestellt werden. Bei mehrfachen Hin- und Hergängen zwischen Eintrittsfläche und Rückwand erhält man eine Folge gleichabständiger Echosignale, deren Amplitude mit wachsender Zeit im Allgemeinen abnimmt.

Die Ultraschall-Prüfung der eingangs genannten Art kann dazu dienen, lediglich die Wandstärke zwischen Eintrittsfläche und Rückwand zu bestimmen. Sie kann aber auch dazu dienen, die Qualität einer Punktschweißverbindung zu ermitteln oder Fehlstellen zu erfassen. In all diesen Fällen ist es notwendig, dass eine Information über die Qualität der Ankopplung des Prüfkopfes an die Eintrittsfläche und vorzugsweise auch eine Information über die Qualität der Echofolge vorliegt.

Nach der Lehre der GB-A-2 062 383 werden auf dem Monitor einerseits die normalen Ultraschall-Echosignale und andererseits ein Schwellenwert dargestellt. Es wird kein Teilstück der eigentlichen Echosignale, sondern es wird ein vorgegebener Wert (Schwellenwert) dargestellt.

Nach US-A-4 055 989 wird zusätzlich zur optischen Anzeige ein akustisches Signal ausgegeben oder eine anderweitige Anzeige gemacht, wenn die Kopplung zwischen einem Ultraschall-Sender und einem Ultraschall-Empfänger nicht mehr ausreichend ist. Eine optische Anzeige wird nicht erwähnt. Das ausgegebene Signal betrifft nicht ein Teilstück aus den jeweils aktuell empfangenen Signalen.

Bei der Prüfung von Punktschweißverbindungen einer Kraftfahrzeugkarosserie möchte man eine hohe Prüfgeschwindigkeit erreichen. Wenn man alle Schweißpunkte einer Karosserie prüfen will, müssen typischerweise zweibis dreitausend Punkte geprüft werden. Für jeden einzelnen Punkt muss sicher sein, dass die Ankopplung gut ist und möglichst auch die Echofolge in ausreichender Qualität vorliegt.

Aus US-A-5 717 142 ist ein Ultraschall-Prüfgerät für die zerstörungsfreie Prüfung der Dicke der Rückenfettschicht von Tieren, z.B. Schweinen, bekannt, dieses Ultraschall-Prüfgerät weist auf:

- einen Sende-Empfangs-Prüfkopf, der an die Haut des Tiers ankoppelbar ist,
- einen Sender, der mit dem Prüfkopf verbunden ist und der Sendeimpulse erzeugt und an den Prüfkopf abgibt,
- einen Empfänger, der mit dem Prüfkopf verbunden ist und
- einen Monitor, der mit dem Empfänger verbunden ist zur Darstellung von elektrischen Echosignalen, die vom Empfänger empfangen wurden,

wobei der Prüfkopf Ultraschallimpulse abgibt, die reflektiert werden und zum Prüfkopf zurücklaufen, wobei sie in das Tier eindringen und an unterschiedlichen Zwischenschichten Reflexionen auftreten, und wobei das Ultraschall-Prüfgerät auf dem Monitor zusätzlich und überlappend zur Darstellung der empfangenen elektrischen Echosignale (40, 41, 42, 43) einen querlaufenden Balken darstellt, dessen Länge ein Maß für die Genauigkeit der Erfassung der Dicke der Rückenfettschicht des untersuchten Tieres ist.

Mit den Ultraschall-Prüfgeräten für die zerstörungsfreie Prüfung eines Werkstücks nach dem Stand der Technik ist es erfahrungsgemäß ausgesprochen schwierig, sowohl auf gute Ankopplung, als auch auf gute Echofolgen zu achten. Es werden hohe Anforderungen an den Prüfer, der das Ultraschall-Prüfgerät bedient, gestellt. Nur erfahrene und gut ausgebildete Prüfer erkennen aus einem A-Bild sowohl gute Ankopplung als auch gute Rückwandechofolge und möglichst auch eine Fehlerechofolge.

Darüber hinaus müssen die Ultraschallparameter, wie Schallgeschwindigkeit, Prüfkopfvorlauf, Verstärkung, Bildanfang und Bildbreite genauestens eingestellt werden. Schließlich hat die Beschaffenheit der Blechverbindung, so insbesondere die Dicke jedes einzelnen der verbundenen Bleche, die Anzahl der Blechverbindungen, die Schallschwächung im Material und in der Schweißlinse eine Auswirkung auf das Prüfergebnis, also auf das A-Bild.

Beim Verfahren nach dem Stand der Technik koppelt ein Prüfer einen Ultraschallprüfkopf an eine zu testende Punktschweißverbindung an und bewegt den Prüfkopf in mindestens zwei Raumwinkeln und absolut gegenüber dem Schweißpunkt solange, bis eine gute Rückwandechofolge bei ausreichend gutem Eintrittssignal erreicht wird. Er bewegt den Prüfkopf solange, bis er ein ausreichend gutes A-Bild erhält, man spricht hier von einem "Züchten eines guten A-Bildes".

Hier setzt die Erfindung ein. Sie hat es sich zur Aufgabe gemacht, die Arbeit des Prüfers zu erleichtern und dem Prüfer ein Verfahren zur Ultraschallprüfung sowie ein Ultraschall-Prüfgerät in die Hand zu geben, das ihm klare Aussagen über Qualität einer Ankopplung und einer Echofolge gibt, ohne dass er auf Details im A-Bild achten muss.

Diese Aufgabe wird gelöst durch ein Ultraschall-Prüfgerät mit den Merkmalen des Patentanspruchs 1 sowie durch ein Verfahren mit den Merkmalen des Anspruchs 9.

Die Balkenanzeige gibt mindestens einen Signalwert aus, beispielsweise einen Signalwert für das Eintrittsecho oder einen Signalwert für die Güte einer Rückwandechofolge. Im letzteren Fall wird über mehrere Rückwandechosignale eine Auswertung durchgeführt und ein Signalwert ausgegeben, der aus einer Mittlung über mehrere Signale von Rückwandechos errechnet ist.

Die Darstellung des mindestens einen Signalwertes auf der Balkenanzeige erlaubt eine unmittelbare qualitative Aussage über den jeweiligen mindestens einen Signalwert. Bei der praktischen Prüfung kann der Prüfer sich im Wesentlichen auf das A-Bild konzentrieren und nebenbei die Balkenanzeige im Auge behalten, er braucht der Balkenanzeige nicht seine volle Aufmerksamkeit zu schenken. Die Balkenanzeige gibt Informationen wieder, die grundsätzlich auch im A-Bild enthalten sind. Die entsprechenden Aussagen sind aber nun über die Balkenanzeige besser für den Prüfer erfassbar und deutlicher dargestellt. Einzelheiten des A-Bildes werden in der Balkenanzeige gut erkennbar und insbesondere farblich schnell erfassbar hervorgehoben.

Dies vereinfacht die Ultraschall-Prüfung und hilft insbesondere, die Aufmerksamkeit des Prüfers auch auf Dauer zu erhalten.

Die Darstellung der Balkenanzeige verändert sich beim "Züchten eines guten A-Bildes" ebenso wie das A-Bild in Echtzeit. Dies bedeutet, dass der Prüfer nach jeder neuen Justierung des Prüfkopfes unmittelbar das der gewählten Orientierung des Prüfkopfes zugehörige Ultraschallsignal erhält. Wenn sich beim Neuorientieren die Ankopplungsbedingungen ändern, wird sich dies auch gleich in einer anderen Balkenanzeige niederschlagen.

Vorzugsweise wird mit der Balkenanzeige nicht nur ein Signalwert angezeigt sondern werden zwei oder drei Signalwerte dargestellt. Die unterschiedlichen Signalwerte werden durch unterschiedliche Farben dargestellt, beispielsweise durch die Farben einer Verkehrsampel oder andere gut unterscheidbare Farben, wie beispielsweise gelb, grün, blau. Die Balkenanzeige wird ausreichend breit gewählt, damit sie gut erkannt werden kann. Typische Breiten liegen bei mindestens 10mm, vorzugsweise 20 bis 30 mm. Die Balkenanzeige kann eine separate Anzeige sein, beispielsweise ein schmales, längliches Farb-LCD, sie kann aber auch ein Streifen sein, der von einer Anzeigeeinheit, wie sie für das A-Bild benutzt wird, ausgespart ist, so dass A-Bild und Balkenanzeige auf derselben Monitorfläche nebeneinander erscheinen. Neben LCD-Displays haben sich auch andere Farbmonitore, beispielsweise Plasma-Displays bewährt.

Grundsätzlich kann die Balkenanzeige aus einer Reihe Leuchtdioden aufgebaut sein. Dabei werden Leuchtdioden unterschiedlicher Farbe benutzt, um mehrere Balkenanzeigen nebeneinander realisieren zu können. Bevorzugt wird aber die Darstellung unterschiedlicher Signalwerte durch unterschiedliche Farben übereinander.

Die Auswertung der Signalfolge des A-Bildes ist nicht Gegenstand der vorliegenden Anmeldung. Gegenstand der vorliegenden Anmeldung ist eine Hilfestellung des Prüfers beim "Züchten eines guten A-Bildes" durch die Anzeige in Balkenform. Derartige Anzeigen sind heute gebräuchlich bei HiFi-Geräten, mobilen Telefonen und im Bereich der Präsentationsgrafik, wie sie beispielsweise in einem Rechner erstellt werden kann.

In bevorzugter Ausführung der Erfindung ist ein Signalwert der Balkenanzeige der Güte des Eintrittsechos zugeordnet. Eine gute Ankopplung ist primäre Voraussetzung für eine gute Ultraschallmessung. Eine gute Ankopplung liegt dann vor, wenn die gesamte Balkenanzeige sichtbar ausgeleuchtet ist, also ein Signalwert von 100% vorliegt. Die weiteren Signalwerte werden kleiner als 100% gewählt, so dass eine ausreichend gute Ankopplung immer erkennbar bleibt und die weiteren Signalwerte auf derselben Anzeigefläche dargestellt werden können.

Ein überlagerter Balken in einer anderen Farben wird als zweiter Signalwert für die Güte der Rückwandechofolge herangezogen. Die Höhe des Balkens ist ein Maß für die Güte der Rückwandechofolge. Erreicht oder überschreitet der Balken eine vom Einsteller festzulegende Bewertungsschwelle, z.B. 60 % oder 80 % ist eine ausreichende Qualität der Rückwandechofolge gegeben. Das zugehörige A-Bild kann dann zur Bewertung der Punktschweißverbindung verwendet werden. Zusätzlich kann noch ein dritter Farbbalken dargestellt werden, der wiederum kleiner ist als der Farbbalken des Signalwertes für die Güte der Rückwandechofolge. Dieser dritte Farbbalken kann beispielsweise über die Güte der Fehlerechofolge eine Aussage machen. Da er stets unterhalb des Balkens der Rückwandechofolge bleibt, ist auch er gut für sich erkennbar. Es hat sich in den praktischen Versuchen herausgestellt, dass drei überlagerte Balken einer einzigen Balkenanzeige von einem Prüfer sehr gut erkannt werden.

Die Balkenanzeige ist möglichst nahe am Monitor angeordnet oder Teil des Monitors. Auf diese Weise ist für den Prüfer eine gute Zuordnung zum A-Bild möglich, ohne dass er der Balkenanzeige seine volle Aufmerksamkeit schenken muss.

Vorzugsweise verläuft die Balkenanzeige quer zur Zeitachse des A-Bildes auf dem Monitor. Vorzugsweise ist die Balkenanzeige auch gleich hoch wie der Monitor und parallel zum Monitor ausgerichtet, dadurch steigen die Signalwerte auf der Balkenanzeige in gleicher Richtung an wie die elektrischen Spannungen der Signale des A-Bildes.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:

Fig. 1:    Eine prinzipielle Darstellung eines Ultraschall-Prüfgerätes nach der Erfindung,

Fig. 2:    Eine prinzipielle Darstellung wie Figur 1, jedoch in einer anderen Ausführung und nunmehr ohne Prüfkopf und Werkstück,

Fig. 3:    Eine Darstellung wie Figur 2 für eine dritte Ausführung des Prüfgerätes,

Fig. 4:    Eine prinzipielle Darstellung einer Echofolge ähnlich dem Bild in Fig. 1, wie sie typischerweise auf einem Monitor erscheint, und

Fig. 5:    Eine prinzipielle Darstellung einer Echofolge ohne Eintrittsecho und für Rückwandechos, wie sie typischerweise auf einem Monitor erscheint, zur Erläuterung des Verfahrens der Normalisierung einer Echofolge.

In einem Gehäuse 20 eines Ultraschall-Prüfgerätes ist ein Monitor 22 angeordnet, es handelt sich beispielsweise um einen LCD-Monitor. Unmittelbar neben ihm und parallel zu ihm ist eine Balkenanzeige 24 angeordnet. Auch sie ist ein LCD-Display. Die Balkenanzeige 24 hat die gleiche Höhenabmessung wie der Monitor 22. Die Balkenanzeige 24 ist schmal, ihre Breitenabmessung liegt zwischen 10 und 20 mm. Wie der Monitor 22 ist auch die Balkenanzeige 24 im Wesentlichen durch ein Rechteck begrenzt.

Am Gehäuse ist über eine nicht dargestellte Steckverbindung ein Sende-Empfangs-Prüfkopf 26 angeschlossen. Sein Aufbau ist grundsätzlich bekannt, verwiesen wird beispielsweise auf das eingangs genannte DE-Buch. Er hat ein Ankopplungsmittel 28 an seinem frontseitigem Ende. Das Ankopplungsmittel 28 ist hier als eine wassergefüllte Kammer ausgeführt, die durch einen dünnen Kunststofffilm, beispielsweise Latexfilm begrenzt ist. Das Ankopplungsmittel 28 ist zugleich eine Vorlaufstrecke. Das Ankopplungsmittel 28 ermöglicht es, dass direkter Kontakt zu einem Werkstück 30 ohne Einschluss von Luftblasen und dergleichen erreicht wird.

Das Werkstück 30 ist hier ein Teilstück eines Blechplatte, das Werkstück kann auch eine Verbindung zweier Stahlbleche durch Punktschweißung usw. sein. Das Werkstück 30 hat eine Eintrittsfläche 32, die mit dem Ankopplungsmittel 28 in Kontakt ist, und eine Rückwand 34.

Schließlich sind im Gehäuse ein Sender 36 und ein Empfänger 38 untergebracht. Beide sind mit dem Prüfkopf 26 verbunden. Der Sender gibt periodisch Sendeimpulse ab, die den Prüfkopf 26 veranlassen, kurzzeitige Ultraschallimpulse abgeben. Die einzelnen Ultraschallimpulse laufen durch das Ankopplungsmittel 28. Ein Teil jedes Impulses wird im allgemeinen an der Eintrittsfläche 32 reflektiert und kommt als Eintrittsecho 40 zeitlich vor weiteren Signalen im Empfänger an. Der Empfänger ist mit dem Monitor 22 verbunden. Auf dem Monitor ist das entsprechende Signal des Eintrittsechos 40 erkennbar.

Ein Teil jedes Ultraschallimpulses dringt im allgemeinen in das Werkstück ein und wird an der Rückwand 34 reflektiert. Es teilt sich im allgemeinen weiter auf, es kann nach einmaliger Reflektion an der Rückwand wieder durch die Eintrittsfläche 32 in den Prüfkopf 26 gelangen, es wird aber auch teilweise an der Eintrittsfläche 32 reflektiert. Dabei tritt typischerweise einmehrmaliger Hin- und Herlauf innerhalb des Werkstück 30 auf. Dies führt zu einer Echofolge, nämlich Echofolge sogenannter Rückwandechosignale, auf dem Monitor sind das erste Rückwandecho 41, das zweite Rückwandecho 42, das dritte Rückwandecho 43 usw. 44, 45 dargestellt.

Darüber hinaus wird ein Teil des in das Werkstück eingedrungenen Ultraschallimpulses auch an Fehlstellen reflektiert, sofern solche vorliegen. Ein Beispiel für ein Fehlstellenecho ist mit 50 dargestellt.

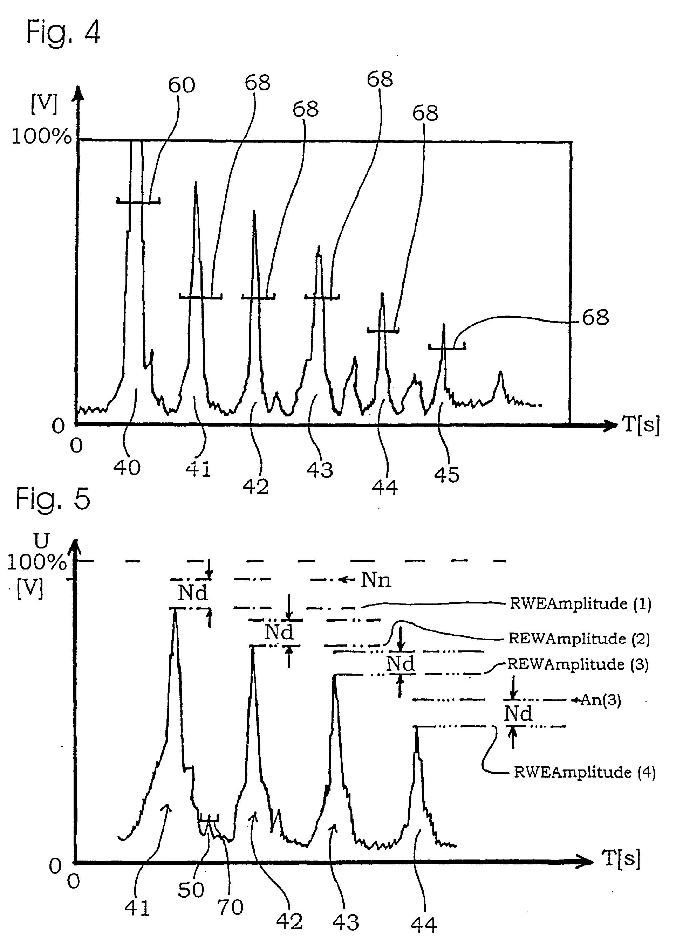

Auf dem Monitor 22 ist ein sogenanntes A-Bild dargestellt, das in Fig. 4 in ähnlicher Form noch einmal für sich dargestellt ist. Aufgetragen über der Zeitachse T in Sekunden (als x-Achse) ist auf der y-Achse der Spannungswert U in Volt der empfangenen Signale.

Auf der Balkenanzeige 24 sind Informationen, die auch das A-Bild des Monitors 22 anzeigt, wiedergegeben. Insgesamt sind drei Signalwerte auf der Balkenanzeige 24 übereinander dargestellt. Die Darstellung dieser Signalwerte ist gut für einen Prüfer zu erfassen. Die Signalwerte sind einzeln für sich dargestellt, die entsprechende Information des A-Bildes muss nicht aufwändig von dem Prüfer aus dem A-Bild herausgelesen werden, sondern wird unmittelbar als Balken dargestellt. Die Balkenanzeige 24 dient somit der gezielten Darstellung selektierter Information aus dem A-Bild. Dargestellt wird ein Signalwert 60 über die Güte des Eintrittsechos, ein Signalwert 62 über die Güte der Rückwandechofolge und ein Signalwert 64 über die Güter der Fehlerechos. Die Reihenfolge dieser drei Signalwerte ergibt auch gleichzeitig ihre Hierarchie bzw. ihre Priorität an. Insoweit ist die Güte des Eintrittsechos die wichtigste Aussage, Voraussetzung für eine gute Ankopplung ist ein ausreichend hohes Eintrittsecho. Der entsprechende Signalwert des Eintrittsechos 60 ist gelb dargestellt. Eine ausreichend gute Ankopplung ist dann gegeben, wenn das Eintrittsecho oberhalb von 100 % liegt. Dies bedeutet, dass im A-Bild das Eintrittsecho über die Oberkante des Monitors hinaus läuft, wie dies auch tatsächlich im A-Bild der Fall ist.

Der Signalwert 62 für die Güte der Rückwandechofolge ist grün dargestellt. Er bleibt unterhalb von 100 %, so dass der gelbe Signalwert des Eintrittsechos 60 stets sichtbar bleibt. Im gezeigten Ausführungsbeispiel liegt der Signalwert 62 bei etwa 86 %. Die Höhe des entsprechenden Signalwertes ist ein Maß für die Güte der Rückwandechofolge. Erreicht oder überschreitet der grüne Balken eine vom Einsteller festzulegende Bewertungsschwelle, ist eine optimale Ankopplung und Züchtung der Rückwandechofolge erreicht. Das entsprechende A-Bild kann zur Auswertung an den Rechner weitergeleitet werden.

Schließlich ist noch ein blauer Balken dargestellt, der entsprechende Signalwert der Güte der Fehlerechos 64 hat einen relativ kleinen Wert, er bleibt unterhalb der anderen Signalwerte 60, 62. In der gezeigten Darstellung liegt der Signalwert 64 bei etwa 14 %.

Auf diese Weise ist es möglich, drei Signalwerte 60, 62 und 64 auf der selben Balkenanzeige 24 übereinander darzustellen. Die Spannungswerte für die Signalwerte 60, 62 und 64 werden wie folgt erhalten:

Im Empfänger 38 wird eine Blende 66 für das Eintrittsecho 40 vorgesehen. Diese Blende 66 kann beliebig verschoben werden. Sie wird von Prüfer so einjustiert, dass das Eintrittsecho in die Blende 66 fällt. Das von jedem einzelnen Ultraschallimpuls erhaltene Eintrittsecho führt zu einem Spannungswert im Empfänger, fällt es in den Bereich der Blende 66, so wird es als Signalwert 60 des Eintrittsechos auf der Balkenanzeige 24 zur Anzeige gebracht. Vorzugsweise hat die Balkenanzeige eine Skalierung wie der Monitor 22 in Richtung seiner y-Achse, also des Spannungswertes. Auf diese Weise kann der elektrische Spannungswert des Eintrittsechos unmittelbar (und soweit er in die Blende 66 fällt) auf der Balkenanzeige 24 dargestellt werden.

Für die Rückwandechos 41, 42, ..45 ist mindestens eine Blende 68 vorgesehen, vorzugsweise sind einzelnen Rückwandechos einzelne Blenden 68 zugeordnet. Sie erfassen den Spannungswert der maximalen Echospannung. Aus mindestens einem Spannungswert, vorzugsweise aus einer beliebigen Mittelung oder mathematischen Bearbeitung mehrerer Spannungswerte wird der Signalwert der Güte der Rückwandechofolge 62 erhalten und wie beschrieben dargestellt.

In gleicher Weise wird mit den Fehlerechos verfahren, auch diese sind Blenden 70 zugeordnet.

Aus dem Vorangegangenen ist ersichtlich, dass sich das erfindungsgemäße Gerät und insbesondere auch das damit durchgeführte Verfahren zur Prüfung von Werkstücken für eine Serienmessung eignet. Beispiel für eine Serienmessung ist die Prüfung von Punktschweißverbindungen von Kraftfahrzeugkarosserien. Das Prüfgerät wird zunächst an einem Werkstück oder wenigen Werkstücken einjustiert, anschließend wird die Serienprüfung durchgeführt.

Die Höhe der einzelnen Signalwerte 60, 62, 64 kann dazu benutzt werden, Einstellungen des Prüfgerätes zu verändern, insbesondere die Verstärkung des Empfängers einzustellen. Wenn beispielsweise der Signalwert des Eintrittsechos 60 kleiner als 100 % ist, kann es sein, dass die Grundverstärkung zu gering ist. Es kann auch sein, dass die Ankopplung schlecht ist. Stellt man bei der anfänglichen Einstellung des Prüfgerätes auf zu prüfende Serienwerkstücke fest, dass der Signalwert des Eintrittsechos 60 den Wert 100 % nicht erreicht, ist die Grundverstärkung zu gering und muss entsprechend erhöht werden. Es kann eine automatische Verstärkungsregelung vorgesehen sein, um die Verstärkung zu korrigieren.

Ebenso kann eine automatische Verstärkungsregelung vorgesehen sein, um die Verstärkung so zu beeinflussen, insbesondere zu erhöhen, dass der Signalwert der Güte der Rückwandechofolge 62 in einem vorgegebenen Bereich, beispielsweise 80 plus/minus 15 % liegt. Die Verstärkungsregelung berücksichtigt, dass dieser Wertebereich erreicht wird. Primäre Voraussetzung ist, dass der Wert des Eintrittsechos über 100 % liegt.

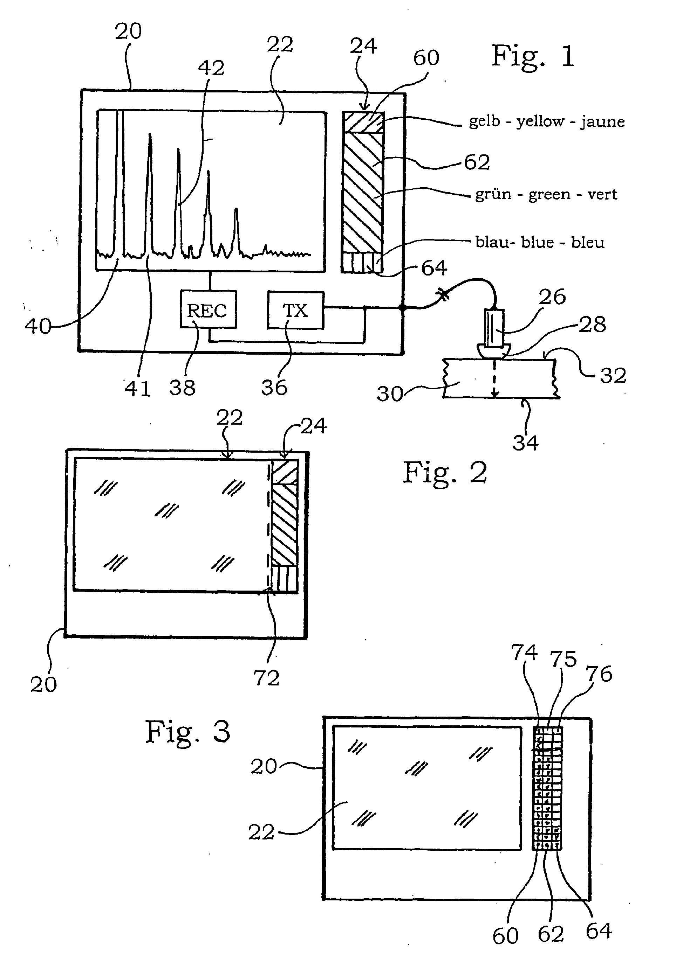

Figur 2 zeigt eine andere Ausbildung des Geräts. Die Balkenanzeige 24 ist nun nicht mehr separat ausgeführt und neben dem Monitor 22, jedoch dicht in seiner Nähe, angeordnet, vielmehr ist nun die Balkenanzeige ein Teil der Fläche des Monitors. Zwischen Balkenanzeige 24 und Restmonitor ist ein schmaler Freiraum 72 in Form eines von oben nach unten laufenden Streifens freigelassen, um eine klare Trennung zu erreichen, er kann z.B. ein Fabbalken, Leerfeld oder ähnlich sein. Der Freiraum 72 ist grundsätzlich nicht nötig, erleichtert aber dem Prüfer die Unterteilung des Monitors 22 zu erkennen. Wie bei der separaten Balkenanzeige 24 ist auch die integrierte Balkenanzeige gemäß Figur 2 rechts neben dem eigentlichen Monitor angeordnet.

Figur 3 schließlich zeigt eine Balkenanzeige aus drei nebeneinander angeordneten Reihen von Leuchtdioden. Die einzelnen Signalwerte 60, 62 und 64 werden nun nicht mehr übereinander sondern nebeneinander dargestellt. Die Reihen Leuchtdioden haben jeweils unterschiedliche Farbe, so ist beispielsweise die Reihe 74, die den Signalwert des Eintrittsechos 60 darstellt, gelb, die nächste Reihe 75 die den Signalwert der Güte der Rückwandechofolge 62 darstellt, rot usw..

Es ist möglich, auf den Balkenanzeigen gemäß Figur 1 und Figur 2 die Signalwerte nebeneinander, teilweise überlagert oder in anderer Form darzustellen.

Im Folgenden wird noch auf eine Normalisierung der Rückwandechofolge eingegangen, hierzu wird Bezug auf Figur 5 genommen.

Die Normalisierung der Rückwandechofolge dient der qualitativen Bewertung der Ausprägung der Rückwandechosamplituden. Es wird ein Normalisierungsniveau für das erste Rückwandecho vorgeben, der entsprechende Wert ist Nn. Das erste Rückwandecho habe eine Amplitude RWE (1), die kleiner ist Nn. Die Differenz Nn-RWE Amplitude (1) wird als Normalisierungsdifferenz Nd bezeichnet.

Rückwandechoamplituden gleich oder größer 100 % werden ohne Normalisierung aussummiert.

Der Parameter "Normalisierungsniveau Nn" ist eine Variable und kann beliebig vorgegeben und verändert werden. Hierdurch hat man einen Einfluß auf die Skalierung des arithmetischen Mittelwertes, der als Signalwert 62 angezeigt wird, man kann diesen also höher oder niedriger ausfallen lassen. Die Normalisierung erfolgt mit folgenden Formeln:

$$Nd = Nn - RWEAmplitude(1) \qquad (1)$$

$$NormAmp(i = 1) = \frac{100\% * RWEAmplitude(i = 1)}{Nn} \qquad (2)$$

Bei der Normalisierung der Amplituden der Rückwandechos ab dem zweiten Rückwandecho werden folgende "Amplitudenwerte An" angesetzt

$$An(i > 1) = RWEAmplitude(i > 1) + Nd \ . \qquad (3)$$

Für An(3) gilt beispielsweise

$$An(3) = RWEAmplitude(4) + Nd$$

Es wird folgende Normalisierung ab dem zweiten Rückwandecho durchgeführt:

$$NormAmp(i > 1) = \frac{100\% * RWEAmplitude(i > 1)}{An(1 + i)} \qquad (4)$$

Über die nachfolgende Gleichung erhält man den Mittelwert aller normierten Rückwandechos, also den Signalwert 62

$$\overline{NormRWE} = \frac{1}{n + m} * (\sum_{i=1}^{n}(RWEAmplitude \geq 100\%) + \sum_{i=1}^{m}NormAmp(i > 1)) \qquad (5)$$

Zusammenfassend hat die Erfindung folgende Vorteile: Das erfindungsgemäße Prüfgerät kann überall dort verwendet werden, wo eine ausgeprägte Echofolge der Ultraschallbewertung und/oder -messungen benötigt wird.

Es wird ein Ankoppelkriterium zur Bewertung der Ankopplung an das Werkstück 30 erreicht, beispielsweise bei der Prüfung von Punktschweißverbindungen. Es wird ein zusätzlicher Indikator bei der digitalen Wanddickenmessung erhalten. Insbesondere ist es hier wichtig zu wissen, ob das Signal, das zur Messung verwendet wird, überhaupt eine ausreichende Echofolge enthält.

Schließlich wird über den Schritt der Normalisierung von Echofolgen eine zusätzliche Bewertungsgröße erreicht.

**Patentansprüche**

1. Ultraschall-Prüfgerät für die zerstörungsfreie Prüfung eines Werkstücks (30), das Ultraschall-Prüfgerät weist auf :

   a. einen Sende-Empfangs-Prüfkopf (26), der ein Ankopplungsmittel (28) zur Ankopplung an eine Eintrittsfläche (32) des Werkstücks (30) aufweist, wobei das Ankopplungsmittel eine Bewegung des Sende-Empfangs-Prüfkopfs (26) auf der Eintrittsfläche (32) des Werkstücks (30) in mindestens zwei Raumwinkeln erlaubt,
   b. einen Sender (36), der mit dem Prüfkopf verbunden ist und der Sendeimpulse erzeugt und an den Prüfkopf abgibt,
   c. einen Empfänger (38), der mit dem Prüfkopf verbunden ist und
   d. einen Monitor (22), der mit dem Empfänger (38) verbunden ist zur Darstellung von elektrischen Echosignalen (40,41, 42,43), die vom Empfänger (38) empfangen wurden, wobei der Prüfkopf Ultraschallimpulse abgibt, die einerseits an der Eintrittsfläche (32) reflektiert werden und zum Prüfkopf zurücklaufen und die andererseits in das Werkstück (30) eindringen, wo sie an einer Rückwand (34) des Werkstücks (30) mindestens einmal reflektiert werden,
   **dadurch gekennzeichnet, dass**
   das Ultraschall-Prüfgerät zusätzlich zur Darstellung der empfangenen elektrischen Echosignale (40,41, 42,43) auf dem Monitor (22) eine Balkenanzeige (24) aufweist, auf der mindestens ein Signalwert in Echtzeit dargestellt ist, der von der Amplitude von einem der folgenden Echosignale (40,41, 42,43) abgeleitet ist:

   i. das an der Eintrittsfläche (32) reflektierte Eintrittsecho (40),
   ii. mindestens ein Rückwandecho (41), und/oder
   iii. ein aus mehreren Rückwandechos(41, 42,43) errechnetes Signal.

2. Ultraschall-Prüfgerät nach Anspruch 1, **dadurch gekennzeichnet, dass** das Werkstück (30) Fehlstellen aufweist, dass die Ultraschallimpulsen auch an den Fehlstellen reflektiert werden und dass auf der Balkenanzeige (24) entweder ein selektiertes Fehlerecho (50) dargestellt wird und/oder ein Signal aus Echosignalen (50) mehrerer Fehlstellen errechnet wird und auf der Balkenanzeige (24) zur Anzeige gebracht wird.

3. Ultraschall-Prüfgerät nach Anspruch1, **dadurch gekennzeichnet, dass** die Balkenanzeige (24) eine Farbdarstellung ermöglicht und dass mindestens zwei Signalwerte durch unterschiedliche Farben übereinander auf der Balkenanzeige (24) dargestellt sind.

4. Ultraschall-Prüfgerät nach Anspruch1, **dadurch gekennzeichnet, dass** die Balkenanzeige (24) unmittelbar neben dem Monitor (22) angeordnet ist oder dass ein streifenförmiger Bereich, vorzugsweise ein Randbereich des Monitors (22), als Balkenanzeige (24) verwendet wird.

5. Ultraschall-Prüfgerät nach Anspruch1, **dadurch gekennzeichnet, dass** die Balkenanzeige (24) quer verlaufend zu einer Zeitachse des Monitors (22) angeordnet ist.

6. Ultraschall-Prüfgerät nach Anspruch1, **dadurch gekennzeichnet, dass** die Balkenanzeige (24) eine Länge aufweist, die eine Querabmessung des Monitors (22) entspricht, die insbesondere der Abmessung des Monitors (22) in Richtung der angezeigten Spannungswerte entspricht.

7. Ultraschall-Prüfgerät nach Anspruch1. **dadurch gekennzeichnet, dass** die Balkenanzeige (24) durch eine Farb-LCD-Anordnung realisiert ist.

8. Ultraschall-Prüfgerät nach Anspruch1, **dadurch gekennzeichnet, dass** das Werkstück (30) aus mindestens zwei Blechen zusammengesetzt ist, die durch eine Punktschweissverbindung miteinander verbunden sind und dass die Qualität der Punktschweissverbindung ermittelt werden soll.

9. Verfahren für die zerstörungsfreie Prüfung eines Werkstücks (30) mittels eines Ultraschall-Prüfgeräts, die folgenden Verfahrensschritte umfassend:

e. Erzeugen von Ultraschallsendeimpulsen mittels eines Sende-Empfangs-Prüfkopfs (26),

f. Ankoppeln der Ultraschallsendeimpulse an eine Eintrittsfläche (32) des Werkstücks (30),

g. Detektieren von reflektierten Ultraschallsendeimpulsen,

h. Erzeugen von elektrischen Echosignalen (40, 41, 42, 43) aus den detektierten reflektierten Ultraschallsendeimpulsen,

i. Darstellen der elektrischen Echosignale auf einem Monitor (22),

durch folgende weitere Verfahrensschritte **gekennzeichnet**:

j. Darstellen mindestens eines Signalwerts in Echtzeit auf einer Balkenanzeige (24), der von der Amplitude von einem der folgenden Echosignale (40,41, 42,43) abgeleitet ist:

i. das an der Eintrittsfläche (32) reflektierte Eintrittsecho (40),

ii. mindestens ein Rückwandecho (41), und/oder

iii. ein aus mehreren Rückwandechos(41, 42,43) errechnetes Signal, und

k. Bewegen des Sende-Empfangs-Prüfkopfs (26) in mindestens zwei Raumwinkeln auf der Eintrittsfläche (32) des Werkstücks (30), um die Qualität der Ankopplung an das zu prüfende Werkstück (30) zu optimieren.

**Claims**

1. An ultrasonic inspection apparatus for non-destructive inspection of a workpiece (30), said ultrasonic inspection apparatus having:

a. a transmit/receive probe (26) comprising a couplant (28) for coupling to an entrance surface (32) of the workpiece (30), whereby said couplant allows for a movement of the transmit/receive probe (26) on the entrance surface (32) of the workpiece (30) in at least two solid angles;

b. a transmitter (36) connected to said probe and generating transmit pulses which it then delivers to said probe,

c. a receiver (38) connected to said probe and

d. a monitor (22) that is connected to said receiver (38) for displaying electric echo signals (40, 41, 42, 43) received by said receiver (38), whereby said probe emits ultrasonic pulses that, on the one side, are reflected at the entrance surface (32) and run back to the probe and that on the other side penetrate the workpiece (30) where they are reflected at least once at a backwall (34) of the workpiece (30),

**characterized in that**

said ultrasonic inspection apparatus has on the monitor (22), in addition to the display displaying the received electric echo signals (40, 41, 42, 43), a bar display (24) showing at least one signal value in real time, with said signal being derived from the amplitude of one of the following echo signals (40, 41, 42, 43):

i. the entrance echo (40) reflected at the entrance surface (32),

ii. at least one backwall echo (41)

iii. and/or one signal calculated from a plurality of backwall echoes (41, 42, 43).

2. The ultrasonic inspection apparatus of claim 1, **characterized in that** the workpiece (30) comprises flaws, that the ultrasonic pulses are also reflected at the flaws and that the bar display (24) displays either a selected flaw echo (50) and/or a signal that is calculated from echo signals (50) of a plurality of flaws and is displayed on the bar display (24).

3. The ultrasonic inspection apparatus of claim 1, **characterized in that** the bar display (24) permits to display in colours and that at least two signal values are shown one above the other in different colours on the bar display (24).

4. The ultrasonic inspection apparatus of claim 1, **characterized in that** the bar display (24) is disposed immediately beside the monitor (22) or that a stripe-shaped area, preferably a border area of the monitor (22) is used as the bar display (24).

5. The ultrasonic inspection apparatus of claim 1, **characterized in that** the bar display (24) is disposed so as to extend transversely with respect to a time axis of the monitor (22).

6. The ultrasonic inspection apparatus of claim 1, **characterized in that** the bar display (24) has a length that equals a transverse dimension of the monitor (22), that more specifically equals the dimension of the monitor (22) in the direction of the voltage values displayed.

7. The ultrasonic inspection apparatus of claim 1, **characterized in that** the bar display (24) is realized by a colour LCD array.

8. The ultrasonic inspection apparatus of claim 1, **characterized in that** the workpiece (30) is composed of at least two sheet metal plates that are joined together by a spot weld joint and that the quality of the spot weld joint is to be determined.

9. Method for a non-destructive inspection of a workpiece (30) with an ultrasonic inspection apparatus, said method comprising the following steps:

> e. generating transmit pulses with a transmit/receive probe (26),
> f. coupling the transmit pulses to an entrance surface (32) of the probe (30),
> g. detecting reflected ultrasonic pulses,
> h. generating electric echo signals (40, 41, 42, 43) from the detected reflected ultrasonic pulses,
> i. displaying the electric echo signals (40, 41, 42, 43) on a monitor (22), **characterized by** the following further method steps:
> j. displaying at least one signal value in real time on a bar display (24), which signal value is derived from the amplitude of one of the following echo signals (40, 41, 42, 43):

>> i. the entrance echo (40) reflected at the entrance surface (32),
>> ii. at least one backwall echo (41) and/or
>> iii. a signal calculated from a plurality of backwall echoes (41, 42, 43),

> and
> k. moving the transmit/receive probe (26) on the entrance surface (32) of the workpiece (30) in at least two solid angles for optimizing the quality of the coupling to the probe (30).

**Revendications**

1. Appareil de contrôle par ultrasons pour le contrôle non-destructif d'une pièce à étudier (30), ledit appareil de contrôle par ultrasons comprenant :

> a. un palpeur émetteur-récepteur (26) qui présente un moyen de couplage (28) pour le couplage à une face d'entrée (32) de la pièce (30), ledit moyen de couplage permettant un déplacement du palpeur émetteur-récepteur (26) sur la face d'entrée (32) de la pièce (30) dans au moins deux angles solides,
> b. un émetteur (36) qui est relié au palpeur et qui génère des impulsions d'émission et délivre celles-ci au palpeur,
> c. un récepteur (38) qui est relié au palpeur, et
> d. un écran de visualisation (22) qui est relié au récepteur (38) et qui est destiné à afficher des signaux d'écho électriques (40, 41, 42, 43) qui ont été reçus par ledit récepteur (38), le palpeur émettant des impulsions ultrasonores qui, d'un côté, sont réfléchies sur la face d'entrée (32) et retournent au palpeur et qui, de l'autre côté, pénètrent dans la pièce (30) où elles sont réfléchies au moins une fois sur une face arrière (34) de ladite pièce (30),

> **caractérisé par le fait que**
> ledit appareil de contrôle par ultrasons présente, en plus de l'affichage des signaux d'écho électriques reçus (40, 41, 42, 43) sur ledit écran (22), un affichage à barres (24) où est représentée en temps réel au moins une valeur de signal qui est dérivée de l'amplitude de l'un des signaux d'écho suivants (40, 41, 42, 43) :

>> i. l'écho d'entrée (40) réfléchi sur la face d'entrée (32),
>> ii. au moins un écho de fond (41), et/ou
>> iii. un signal calculé à partir de plusieurs échos de fond (41, 42, 43).

**2.** Appareil de contrôle par ultrasons selon la revendication 1, **caractérisé par le fait que** ladite pièce (30) présente des défauts, que les impulsions ultrasonores sont réfléchies également sur les défauts et que soit un écho de défaut sélectionné (50) est affiché sur ledit affichage à barres (24) et/ou un signal est calculé à partir de signaux d'écho (50) de plusieurs défauts et est affiché sur l'affichage à barres (24).

**3.** Appareil de contrôle par ultrasons selon la revendication 1, **caractérisé par le fait que** ledit affichage à barres (24) permet un affichage en couleur et qu'au moins deux valeurs de signal sont représentées l'une au-dessus de l'autre par des couleurs différentes sur ledit affichage à barres (24).

**4.** Appareil de contrôle par ultrasons selon la revendication 1, **caractérisé par le fait que** ledit affichage à barres (24) est disposé directement à côté de l'écran de visualisation (22) ou qu'une zone en forme de bande, de préférence une zone marginale de l'écran (22), est utilisée comme affichage à barres (24).

**5.** Appareil de contrôle par ultrasons selon la revendication 1, **caractérisé par le fait que** l'affichage à barres (24) est disposé de manière à s'étendre transversalement à un axe de temps de l'écran de visualisation (22).

**6.** Appareil de contrôle par ultrasons selon la revendication 1, **caractérisé par le fait que** l'affichage à barres (24) présente une longueur qui correspond à une dimension transversale dudit écran (22), qui correspond en particulier à la dimension de l'écran (22) dans le sens des valeurs de tension affichées.

**7.** Appareil de contrôle par ultrasons selon la revendication 1, **caractérisé par le fait que** ledit affichage à barres (24) est réalisé par un arrangement d'affichage à cristaux liquides couleur.

**8.** Appareil de contrôle par ultrasons selon la revendication 1, **caractérisé par le fait que** ladite pièce (30) est constituée par au moins deux tôles qui sont reliées entre elles par une soudure par points et que la qualité de la soudure par points doit être déterminée.

**9.** Procédé pour le contrôle non-destructif d'une pièce (30) au moyen d'un appareil de contrôle par ultrasons, ledit procédé comprenant les étapes suivantes de procédé :

    e. génération d'impulsions d'émission ultrasonores au moyen d'un palpeur émetteur-récepteur (26),
    f. couplage des impulsions d'émission ultrasonores à une face d'entrée (32) de la pièce (30),
    g. détection d'impulsions d'émission ultrasonores réfléchies,
    h. génération de signaux d'écho électriques (40, 41, 42, 43) à partir des impulsions d'émission ultrasonores réfléchies sélectionnées,
    i. affichage des signaux d'écho électriques sur un écran de visualisation (22),

**caractérisé par** les autres étapes de procédé suivantes :

    j. représentation en temps réel d'au moins une valeur de signal sur un affichage à barres (24), qui est dérivée de l'amplitude de l'un des signaux d'écho suivants (40, 41, 42, 43) :

        i. l'écho d'entrée (40) réfléchi sur la face d'entrée (32),
        ii. au moins un écho de fond (41), et/ou
        iii. un signal calculé à partir de plusieurs échos de fond (41, 42, 43), et

    k. déplacement du palpeur émetteur-récepteur (26) dans au moins deux angles solides sur ladite face d'entrée (32) de la pièce (30) afin d'optimiser la qualité du couplage à ladite pièce (30).

Fig. 1

gelb - yellow - jaune

grün - green - vert

blau- blue - bleu

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2062383 A
- US 4055989 A
- US 5717142 A